(19) Europäisches Patentamt / European Patent Office / Office européen des brevets

(11) **EP 4 477 689 A1**

(12) **EUROPEAN PATENT APPLICATION**
published in accordance with Art. 153(4) EPC

(43) Date of publication:
**18.12.2024  Bulletin 2024/51**

(21) Application number: 23749827.4

(22) Date of filing: **02.02.2023**

(51) International Patent Classification (IPC):
**C08J 3/12** *(2006.01)*     **C08J 3/05** *(2006.01)*
**C08J 5/18** *(2006.01)*

(52) Cooperative Patent Classification (CPC):
**C08J 3/05; C08J 3/12; C08J 5/18**

(86) International application number:
**PCT/JP2023/003423**

(87) International publication number:
**WO 2023/149511 (10.08.2023 Gazette 2023/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.02.2022  JP 2022017362**

(71) Applicant: **Kaneka Corporation**
**Osaka-shi, Osaka 530-8288 (JP)**

(72) Inventors:
• **HIRANO, Masaru**
 **Takasago-shi, Hyogo 676-8688 (JP)**
• **ASHIDA, Tomoaki**
 **Takasago-shi, Hyogo 676-8688 (JP)**
• **ISHIHARA, Morio**
 **Takasago-shi, Hyogo 676-8688 (JP)**
• **SUGIYAMA, Hiroaki**
 **Takasago-shi, Hyogo 676-8688 (JP)**

(74) Representative: **Vossius & Partner**
**Patentanwälte Rechtsanwälte mbB**
**Siebertstrasse 3**
**81675 München (DE)**

(54) **POLY(HYDROXYALKANOIC ACID) POWDER AND USE THEREOF**

(57)    An object is to provide (I) a PHA powder which has (i) good redispersibility when the PHA powder is formed into a slurry and (ii) good film forming properties when the PHA powder is applied to slurry coating and (II) a method for producing the PHA powder. The object is attained by providing a PHA powder in which a composition ratio of a 3-hydroxybutyrate unit to a 3-hydroxyhexanoate unit is 80/20 to 91/9 (mol/mol), a moisture content is not more than 20%, and a circularity of a primary particle present at a surface of the PHA powder is not less than 0.92.

EP 4 477 689 A1

**Description**

Technical Field

The present invention relates to a polyhydroxyalkanoate (hereinafter may be referred to as "PHA") powder and a method for producing the PHA powder. The present invention also relates to an aqueous suspension of the PHA powder and a method for producing the aqueous suspension of the PHA powder.

Background Art

PHAs are known to have biodegradability. In consideration of costs and maintenance of the qualities of the PHAs, the PHAs are generally transported in the form of more preferably a powder than a slurry (also referred to as "aqueous suspension"). Therefore, a method of producing a PHA powder by spray-drying a slurry of a PHA is developed (Patent Literature 1).

Citation List

[Patent Literature]

[Patent Literature 1]
International Publication No. WO 2018/070492

Summary of Invention

Technical Problem

Although the above-described technology is excellent, there is room for improvement from the viewpoint of (i) redispersibility when the PHA powder is formed into a slurry and (ii) film forming properties when the PHA powder is applied to slurry coating.
Under the circumstances, the object of an aspect of the present invention is to provide (I) a PHA powder which has (i) good redispersibility when the PHA powder is formed into a slurry and (ii) good film forming properties when the PHA powder is applied to slurry coating and (II) a method for producing the PHA powder.

Solution to Problem

The inventors of the present invention conducted diligent studies in order to attain the above object, and consequently found the following for the first time: a PHA powder which had a specific composition ratio of a 3-hydroxybutyrate (hereinafter may be referred to as "3HB") unit to a 3-hydroxyhexanoate (hereinafter may be referred to as "3HH") unit, a specific moisture content, and a specific circularity had (i) good redispersibility when the PHA powder was formed into a slurry and (ii) good film forming properties when the PHA powder was applied to slurry coating. As a result, the inventors of the present invention competed the present invention.
Therefore, a PHA powder in accordance with an aspect of the present invention (hereinafter referred to as "the present PHA powder") is a PHA powder wherein a composition ratio of a 3HB unit to a 3HH unit is 80/20 to 91/9 (mol/mol), a moisture content is not more than 20%, and a circularity of a primary particle forming a surface of the PHA powder is not less than 0.92.
A method for producing the present PHA powder (hereinafter referred to as "the present production method") is a method for producing a PHA powder, a PHA in the PHA powder being such that a composition ratio of a 3-hydroxybutyrate unit to a 3-hydroxyhexanoate unit is 80/20 to 91/9 (mol/mol), the method including: (a) a step of adding a dispersing agent to an aqueous PHA suspension and adjusting a pH to not more than 7; and (b) a step of spray-drying the aqueous PHA suspension prepared in the step (a), in the step (b), thermal drying energy/mass of a slurry being 1130 J/g to 1270 J/g.

Advantageous Effects of Invention

An aspect of the present invention makes it possible to provide (I) a PHA powder which has (i) good redispersibility when the PHA powder is formed into a slurry and (ii) good film forming properties when the PHA powder is applied to slurry coating and (II) a method for producing the PHA powder.

Description of Embodiments

The following description will discuss embodiments of the present invention in detail. Note that a numerical range expressed as "A to B" means "not less than A and not more than B", unless otherwise specified herein.

[1. Outline of the present invention]

As described above, Patent Literature 1 discloses a method of producing a PHA powder by spray-drying a slurry of a PHA. As an aspect of use of a PHA powder obtained by such a method, a technology of forming a PHA coating film by forming the PHA powder into a slurry again and then applying the slurry (slurry coating) is developed.

However, while conducting studies, the inventors of the present invention found that there was a case where a PHA powder obtained by the above method was not successfully redispersed when a slurry was prepared from the PHA powder. Moreover, the inventors of the present invention found that, in a case where a PHA coating film was formed by slurry coating, there was room for improvement also from the viewpoint of film forming properties. Specifically, the inventors of the present invention found out the following problems with a case where a redispersible powder was industrially produced from a PHA which was usable for slurry coating and which had a specific 3HH composition. (1) In order to volatilize water by spray drying, thermal energy is applied. In a case where the thermal energy is excessively high, PHA primary particles may fuse together, and an obtained PHA powder may not be successfully redispersed.

(2) In a case where the thermal energy is low, a redispersible powder having a high moisture content is obtained. However, in a case where a moisture content is high, it is not possible to maintain qualities, and thus there is a problem with the stability of the qualities (for example, in a case where the redispersible powder is stored at a specific temperature for a long time period, corrosion or molds may occur).

Under the circumstances, the inventors of the present invention conducted diligent studies in order to solve the above problems, and consequently found the following for the first time: a PHA powder which had a specific composition ratio of a 3HB unit to a 3HH unit, a specific moisture content, and a specific circularity had (i) good redispersibility when the PHA powder was formed into a slurry and (ii) good film forming properties when the PHA powder was applied to slurry coating. Moreover, the inventors of the present invention found that the PHA powder had improved stability of qualities in a state of a powder.

Since the present PHA powder has the above effects, the present PHA powder is advantageous for, for example, slurry coating. Furthermore, as compared with a conventional slurry (aqueous PHA suspension), the present PHA powder is advantageous for, in particular, transportation, from the viewpoint of costs, maintenance of qualities, and the like.

Moreover, the configuration as described above makes it possible to reduce the amount of plastic wastes to be generated. Thus, the present invention can contribute to, for example, attaining the sustainable development goals (SDGs) such as Goal 12 "Ensure sustainable consumption and production patterns" and Goal 14 "Conserve and sustainably use the oceans, seas and marine resources for sustainable development". The present invention will be described below in detail.

[2. PHA powder]

The present PHA powder is a PHA powder in which the composition ratio of a 3HB unit to a 3HH unit is 80/20 to 91/9 (mol/mol), a moisture content is not more than 20%, and a circularity of a primary particle present at a surface of the PHA powder is not less than 0.92. Since the present PHA powder has the above specific composition ratio of the 3HB unit to the 3HH unit, the above specific moisture content, and the above specific circularity, the present PHA powder has (i) good redispersibility when the PHA powder is formed into a slurry and (ii) good film forming properties when the PHA powder is applied to slurry coating.

(PHA)

A PHA in the present PHA powder is a copolymer of 3HB and 3HH. A preferable example of such a resin is poly(3-hydroxybutyrate-co-3-hydroxyhexanoate) (hereinafter may be referred to as "P3HB3HH"). However, the resin is not limited to this example. In the following description, P3HB3HH is mainly taken as a representative example, for convenience.

By changing the composition ratio of a repeating unit of 3HB and a repeating unit of 3HH, it is possible to change the melting point and crystallinity of P3HB3HH, and consequently possible to change the physical properties, such as a Young's modulus and heat resistance, of P3HB3HH. This makes it possible to impart a physical property intermediate between those of polypropylene and polyethylene to P3HB3HH.

The PHA in the present PHA powder is such that the composition ratio of the 3HB unit to the 3HH unit is 80/20 to 91/9 (mol/mol), preferably 81/19 to 90/10 (mol/mol), more preferably 82/18 to 89/ 11 (mol/mol), and even more preferably 83/17 to 88/12 (mol/mol). In a case where the composition ratio of the 3HB unit to the 3HH unit is not more than 91/9 (mol/mol), sufficient plasticity is obtained. In a case where the composition ratio is not less than 80/20 (mol/mol), sufficient hardness is obtained.

In an embodiment of the present invention, the weight average molecular weight (hereinafter may be referred to as "Mw") of the PHA is not particularly limited, but is preferably 150,000 to 800,000, more preferably 200,000 to 700,000, and even more preferably 250,000 to 600,000. In a case where the weight average molecular weight is not less than 150,000, sufficient mechanical properties and the like are obtained. In a case where the weight average molecular weight is not more than 800,000, sufficient crystallization speed is obtained, and good moldability is achieved. The weight average molecular weight of the PHA can be determined as a polystyrene-equivalent molecular weight, by using a gel permeation chromatograph (GPC) ("Shodex GPC-101" manufactured by Showa Denko K.K.), a polystyrene gel ("Shodex K-804" manufactured by Showa Denko K.K.) for a column, and chloroform as a mobile phase.

The PHA is produced from, for example, a microorganism that can produce a PHA in a cell. For example, it is possible to use a microorganism isolated from nature, a microorganism deposited in a depositary institution (for example, IFO and ATCC) for microbial strains, or a mutant, a transformant, or the like that can be prepared from any of these microorganisms. Examples of a microbial cell that produces P3HB, which is an example of the PHA, include *Bacillus megaterium*, which is the first P3HB-producing microbial cell discovered in 1925, and also include other natural microorganisms such as *Cupriavidus necator* (former classification: *Alcaligenes eutrophus, Ralstonia eutropha*) and *Alcaligenes latus.* These microorganisms are known to have PHAs accumulated within the cells thereof.

Examples of a microbial cell that produces a copolymer of hydroxybutyrate and another hydroxyalkanoate, the copolymer being an example of the PHA, include: *Aeromonas caviae*, which is a P3HB3HV and P3HB3HH-producing microorganism; and *Alcaligenes eutrophus,* which is a P3HB4HB-producing microorganism. In particular, regarding P3HB3HH, the microbial cell is more preferably *Alcaligenes eutrophus* AC32 strain (FERM BP-6038), which has introduced therein genes of a group of PHA synthetases, (T. Fukui, Y. Doi, J. Bacteriol., 179, pp. 4821 to 4830 (1997)), or the like, for the purpose of enhancing the productivity of P3HB3HH. Besides the above, the microbial cell may be of a genetically engineered microorganism which has introduced therein various types of PHA synthesis-related genes selected according to a desired PHA to be produced.

The PHA can also be produced by the method disclosed in, for example, International Publication No. WO 2010/013483. Examples of commercially available products of the PHA include "KANEKA biodegradable polymer PHBH (registered trademark)" available from KANEKA CORPORATION.

(Moisture content)

The moisture content of the present PHA powder is not more than 20%, preferably not more than 18%, and more preferably not more than 15%. In a case where the moisture content of the present PHA powder is not more than 20%, good powder flowability is exhibited. The moisture content of the present PHA powder is particularly preferably not more than 2.0%, from the viewpoint of the stability of qualities. It is more preferable that the moisture content of the present PHA powder be lower. The lower limit of the moisture content is not particularly limited, and is, for example, not less than 0.1%.

(Circularity)

In the present specification, the expression "circularity of a primary particle present at a surface of the PHA powder (hereinafter simply referred to as "circularity")" is intended to mean a degree of fusion of primary particles. Specifically, as the circularity becomes lower, the primary particles are more fused. As the circularity becomes higher, the degree of fusion of the primary particles becomes lower. The circularity is a value measured by the method described in Examples.

The circularity in the present PHA powder is not less than 0.92, preferably not less than 0.94, and more preferably not less than 0.95. In a case where the circularity in the present PHA powder is not less than 0.92, fusion of PHA particles does not occur, and the present PHA powder has good redispersibility when the present PHA powder is formed into a slurry. It is more preferable that the circularity in the present PHA powder be higher. The upper limit of the circularity is not particularly limited, and is, for example, not more than 1.

(Dispersing agent)

In an embodiment of the present invention, the present PHA powder may further contain a dispersing agent. In a case where the present PHA powder contains the dispersing agent, it is possible to prevent aggregation of the PHA when the pH of an aqueous PHA suspension is adjusted to not more than 7, and possible to smoothly carry out spray drying.

The dispersing agent is not particularly limited, and examples of thereof include completely saponified polyvinyl alcohols, partially saponified polyvinyl alcohols, modified polyvinyl alcohols (for example, carbonyl group-modified polyvinyl alcohols, carboxyl group-modified polyvinyl alcohols, silanol group-modified polyvinyl alcohols, cation-modified polyvinyl alcohols, amino group-modified polyvinyl alcohols, and itaconic acid-modified polyvinyl alcohols), a partially saponified ethylene-vinyl acetate copolymer, water-soluble cellulose derivatives (for example, methyl celluloses such as hydroxyethylmethyl cellulose and carboxymethyl cellulose), alginic acids, water-soluble alginic acid derivatives (for example, sodium alginate, potassium alginate, and ammonium alginate), agar, gelatin, carrageenan, polyacrylic acid derivatives (for example, sodium polyacrylate, butyl polyacrylate, and polyacrylic ester), and alkylene oxide-based dispersing agents. In particular, from the viewpoint of ease of redispersion, polyvinyl alcohols, modified polyvinyl alcohols, water-soluble cellulose derivatives, alginic acids, water-soluble alginic acid derivatives, agar, gelatin, carrageenan, and polyacrylic acid derivatives are preferable, and polyvinyl alcohols and modified polyvinyl alcohols are more preferable.

For example, a polyvinyl alcohol having an average polymerization degree of not less than 200 and not more than 3,000 and a saponification degree of less than 98.5 mol% and not less than 30 mol% can be used.

For example, an alkylene oxide-based dispersing agent disclosed in International Publication No. WO 2021/085534 can be used.

The present PHA powder contains the dispersing agent in an amount of preferably 0.1% by weight to 5.0% by weight, more preferably 1.0% by weight to 4.0% by weight, and even more preferably 1.5% by weight to 3.5% by weight. In a case where the present PHA powder contains the dispersing agent in an amount of 0.1% by weight to 5.0% by weight, it is possible to prevent the aggregation of the PHA when the pH of the aqueous PHA suspension is adjusted to not more than 7, and possible to smoothly carry out the spray drying.

In an embodiment of the present invention, the present PHA powder is produced by the method described in [4. Method for producing PHA powder] below.

The present PHA powder may contain various components which have been produced or have not been removed in the course of the present production method, provided that the effect of the present invention is brought about.

The present PHA powder can be used in various applications such as paper, films, sheets, tubes, plates, rods, containers (for example, bottle containers), bags, and parts.

[3. Aqueous suspension of PHA powder]

In an embodiment of the present invention, an aqueous suspension of a PHA powder, the aqueous suspension containing the present PHA powder, (hereinafter referred to as "the present aqueous suspension") is provided. Since the present aqueous suspension contains the present PHA powder, the present aqueous suspension has (i) excellent redispersibility when the present aqueous suspension is formed into a slurry and (ii) excellent film forming properties when the present aqueous suspension is applied to slurry coating. The present aqueous suspension is obtained by suspending the present PHA powder in an aqueous solvent.

Regarding the present aqueous suspension, the descriptions in [2. PHA powder] are applied to the "PHA powder".

In an embodiment of the present invention, the present aqueous suspension is produced by the method described in [5. Method for producing aqueous suspension of PHA powder] below.

The present aqueous suspension may contain various components which have been produced or have not been removed in the course of the method for producing the present aqueous suspension, provided that the effect of the present invention is brought about.

[4. Method for producing PHA powder]

The present production method includes the following steps (a) and (b).

· Step (a): a step of adding a dispersing agent to an aqueous PHA suspension and adjusting a pH to not more than 7.
· Step (b): a step of spray-drying the aqueous suspension prepared in the step (a).

Regarding the present production method, the descriptions in [2. PHA powder] are applied to the "PHA" and the "dispersing agent".

(Step (a))

In the step (a) of the present production method, the dispersing agent is added to the aqueous PHA suspension, and the pH is adjusted to not more than 7. In the aqueous suspension, a PHA is present in a state of being dispersed in an aqueous medium. In the present specification, the aqueous suspension containing at least the PHA may be abbreviated to "aqueous PHA suspension".

The step (a) preferably includes the following steps (a1) and (a2).

· Step (a1): a step of adding the dispersing agent to the aqueous PHA suspension.
· Step (a2): a step of adjusting the pH of the aqueous PHA suspension to not more than 7.

The order of carrying out the step (a1) and the step (a2) is not particularly limited, but it is preferable to carry out the step (a2) after the step (a1), from the viewpoint of reducing or preventing aggregation of the PHA in the step (a2) and obtaining an aqueous suspension that is more excellent in dispersion stability of the PHA.

In the step (a), the aqueous PHA suspension which is used as a starting material (the aqueous PHA suspension to which the dispersing agent is not added) is not particularly limited, and can be obtained, for example, by a method including a culturing step of culturing a microorganism capable of producing the PHA within a cell of the microorganism and a refining step of decomposing and/or removing a substance other than the PHA after the culturing step.

The present production method may include, before the step (a), a step of obtaining the aqueous PHA suspension (the aqueous PHA suspension to which the dispersing agent is not added) (for example, a step including the culturing step and the refining step described above). A microorganism used in this step can be, for example, any of the microorganisms described in [2. PHA powder].

A PHA-containing microorganism prepared by culturing the above microorganism contains a large amount of microbial cell-derived components, which are impurities. As such, ordinarily, the refining step can be carried out in order to decompose and/or remove the impurities other than the PHA. The refining step is not particularly limited, and any physical treatment, any chemical treatment, any biological treatment, or the like that can be arrived at by a person skilled in the art can be employed. For example, the refining method described in International Publication No. WO 2010/067543 is preferably employed.

The amount of the impurities which are to remain in an end product is substantially determined by the above refining step. As such, it is preferable to minimize the impurities. Of course, depending on the purpose of use, it may be acceptable to have the impurities mixed in the end product, provided that the physical properties of the end product are not impaired. However, in a case where a highly pure PHA is required, for example, for medical use, it is preferable to minimize the impurities. In so doing, an index of a degree of refinement can be, for example, the amount of protein contained in the aqueous PHA suspension. The amount of the protein is preferably not more than 30,000 ppm, more preferably not more than 15,000 ppm, even more preferably not more than 10,000 ppm, and most preferably not more than 7,500 ppm per weight of the PHA. A refining means is not particularly limited, and can be, for example, the foregoing publicly known method.

Note that a solvent (the "solvent" may be referred to also as "aqueous medium") contained in the aqueous PHA suspension in the present production method may be water or a mixed solvent of water and an organic solvent. In the mixed solvent, the concentration of the organic solvent, which is compatible with water, is not particularly limited, provided that the concentration is equal to or lower than the solubility, in water, of the organic solvent used. The organic solvent compatible with water is not particularly limited, and examples thereof include: alcohols such as methanol, ethanol, 1-propanol, 2-propanol, 1-butanol, 2-butanol, iso-butanol, pentanol, hexanol, and heptanol; ketones such as acetone and methyl ethyl ketone; ethers such as tetrahydrofuran and dioxane; nitriles such as acetonitrile and propionitrile; amides such as dimethylformamide and acetamide; dimethyl sulfoxide; pyridine; and piperidine. Among these examples, methanol, ethanol, 1-propanol, 2-propanol, 1-butanol, 2-butanol, iso-butanol, acetone, methyl ethyl ketone, tetrahydrofuran, dioxane, acetonitrile, propionitrile, and the like are preferable because they are easy to remove. Further, methanol, ethanol, 1-propanol, 2-propanol, butanol, acetone, and the like are more preferable, because they are easy to obtain. Furthermore, methanol, ethanol, and acetone are particularly preferable. Note that the aqueous medium contained in the aqueous PHA suspension may contain another solvent, a microbial cell-derived component, a compound which is produced during refinement, and/or the like, provided that the essentials of the present invention are not impaired.

The aqueous medium contained in the aqueous PHA suspension in the present production method preferably contains water. The amount of water contained in the aqueous medium is preferably not less than 5% by weight, more preferably not less than 10% by weight, even more preferably not less than 30% by weight, and particularly preferably not less than 50% by weight.

<Others>

The aqueous PHA suspension that has not been subjected to the step (a) of the present production method ordinarily has a pH of more than 7 by being subjected to the above refining step. Therefore, the aqueous PHA suspension obtained in the step (a1) of the present production method has a pH of more than 7. As such, by the step (a) (in particular, the step (a2)) of the present production method, the pH of the aqueous PHA suspension is adjusted to not more than 7. A method for adjusting the pH is not particularly limited, and examples thereof include a method in which an acid is added. The acid is not particularly limited, and may be an organic acid or an inorganic acid. The acid may or may not be volatile. More specifically, examples of the acid include sulfuric acid, hydrochloric acid, phosphoric acid, and acetic acid.

The upper limit of the pH of the aqueous PHA suspension which is adjusted in the above adjusting step is not more than 7, preferably not more than 5, and more preferably not more than 4, from the viewpoint of reducing coloring of the PHA during heating and melting of the PHA and from the viewpoint of ensuring the stability of the molecular weight of the PHA during heating and/or drying. The lower limit of the pH is preferably not less than 1, more preferably not less than 2, and even more preferably not less than 3, from the viewpoint of the acid resistance of a container. By adjusting the pH of the aqueous PHA suspension to not more than 7, the PHA is obtained which is reduced in coloring during heating and melting of the PHA and which is prevented from decreasing in molecular weight during heating and/or drying of the PHA.

The concentration of the PHA in the aqueous PHA suspension obtained by the step (a) of the present production method is preferably not less than 30% by weight, more preferably not less than 40% by weight, and even more preferably not less than 50% by weight, from the viewpoint of (i) an economical advantage in terms of utility in drying and (ii) a resultant improvement in productivity. The upper limit of the concentration of the PHA is preferably not more than 65% by weight, and more preferably not more than 60% by weight, because, otherwise, it may not be possible to ensure sufficient flowability due to closest packing. A method for adjusting the concentration of the PHA is not particularly limited, and examples thereof include a method in which an aqueous medium is added and a method in which part of the aqueous medium is removed (for example, by centrifugal separation followed by removal of a supernatant). The adjustment of the concentration of the PHA may be carried out at any stage in the step (a) or may be carried out prior to the step (a).

In an embodiment of the present invention, the present production method is such that the concentration of the PHA in the aqueous suspension prepared in the step (a) is 30% by weight to 65% by weight.

The volume median diameter of the PHA in the aqueous PHA suspension obtained by the step (a) of the present production method (hereinafter, this volume median diameter will be simply referred to as "volume median diameter of the PHA") is preferably not more than 50 times, more preferably not more than 20 times, and even more preferably not more than 10 times the volume median diameter of primary particles of the PHA (hereinafter, this volume median diameter will be referred to as "primary particle diameter"). In a case where the volume median diameter of the PHA is not more than 50 times the primary particle diameter, the aqueous PHA suspension exhibits more excellent flowability. This enables the subsequent step (b) to be carried out highly efficiently, and thus the productivity of the PHA tends to further improve.

In an embodiment of the present invention, the volume median diameter of the PHA in the aqueous PHA suspension obtained by the step (a) of the present production method is, for example, preferably 0.5 $\mu$m to 5.0 $\mu$m, more preferably 1.0 um to 4.5 um, and even more preferably 1.0 um to 4.0 $\mu$m, from the viewpoint of achieving excellent flowability. The volume median diameter of the PHA is measured with use of a laser diffraction/scatter particle size distribution meter LA-950 manufactured by HORIBA.

Note that the volume median diameter of the PHA can be used as an index of a state of dispersion of the PHA in the aqueous PHA suspension. A method for adjusting the volume median diameter of the PHA is not particularly limited, and can be a publicly known means (for example, stirring). For example, the aqueous PHA suspension in which the state of the dispersion has been disrupted by exposure to an acidic condition or the like (for example, in a case where the step (a2) is carried out before the step (a1)) can be subjected to a physical treatment, a chemical treatment, a biological treatment, or the like that can be arrived at by a person skilled in the art so that the state of the dispersion (for example, a state in which the PHA has the above-described volume median diameter) of the PHA in the aqueous PHA suspension is regained.

(Step (b))

In the step (b) of the present production method, the aqueous suspension prepared in the step (a) is spray-dried. Examples of a spray-drying method include a method in which the aqueous PHA suspension in a state of fine droplets is supplied into a dryer and dried in contact with hot air in the dryer. A method for supplying the aqueous PHA suspension in a state of fine droplets (atomizer) into the dryer is not particularly limited, and can be a publicly known method such as a method in which a rotary disc is used or a method in which a nozzle is used. A manner of contact between the droplets and the hot air in the dryer is not particularly limited. For example, the droplets and the hot air can be brought into contact with each other in a co-current manner, a countercurrent manner, or in a manner combining a co-current manner and a countercurrent manner.

A drying temperature during spray drying in the step (b) may be any temperature at which most of the aqueous medium can be removed from the droplets of the aqueous PHA suspension. The drying temperature can be set as appropriate, provided that the aqueous PHA solution can be dried until a desired moisture content is achieved and that a deterioration in quality (a decrease in molecular weight, a reduction in color tone, and the like), melting, and the like are minimized. For example, the temperature of the hot air that blows into the spray dryer can be selected as appropriate within a range of 100°C to 300°C. The volume of the hot air in the dryer can also be set, as appropriate, in accordance with, for example, the size of the dryer.

In the step (b), thermal drying energy/the mass of the slurry is 1130 J/g to 1270 J/g, preferably 1135 J/g to 1265 J/g, and more preferably 1140 J/g to 1260 J/g. In a case where the thermal drying energy/the mass of the slurry is 1130 J/g to 1270 J/g, it is possible to carry out drying without causing thermal fusion of the PHA, in particular, when the composition ratio of a 3HB unit to a 3HH unit is high (for example, the composition ratio of the 3HB unit to the 3HH unit is 80/20 to 91/9 (mol/mol)). Note that the thermal drying energy/the mass of the slurry is calculated by the method described in Examples.

[5. Method for producing aqueous suspension of PHA powder]

A method for producing an aqueous suspension of a PHA powder in accordance with an aspect of the present invention (hereinafter referred to as "the present aqueous suspension production method") is a method for producing an aqueous suspension of a PHA powder, the method including a step pf redispersing the present PHA powder or a PHA powder obtained by the present production method. Since the present PHA powder or the PHA powder obtained by the present production method has excellent redispersibility when the PHA powder is formed into a slurry, it is possible to easily produce an aqueous suspension of the PHA powder by the present aqueous suspension production method. Moreover, the obtained aqueous suspension has excellent film forming properties at a time of coating.

In the present embodiment, a method for redispersing the PHA powder is not particularly limited, and any method used in this technical field is employed. The redispersion in the present embodiment is carried out by, for example, the method described in Examples.

In an embodiment of the present invention, provided is the method in which the step of redispersing the PHA powder includes a step of redispersing the PHA powder in an aqueous solution which has a pH of 4 to 7 to obtain an aqueous suspension which has a pH of 3 to 5 and in which the concentration of a PHA is 45% to 55%. It is preferable that, in the aqueous suspension obtained by this step, the volume median diameter of the PHA in the aqueous suspension after the redispersion is substantially identical to the volume median diameter of the PHA in an aqueous suspension prepared in the step (a).

In the present specification, the expression "the volume median diameter of the PHA in the aqueous suspension after the redispersion is substantially identical to the volume median diameter of the PHA in an aqueous suspension prepared in the step (a)" is intended to mean that a difference between the volume median diameter of the PHA in the aqueous suspension after the redispersion and the volume median diameter of the PHA in the aqueous suspension prepared in the step (a) is not more than 1 $\mu$m.

The present invention is not limited to the embodiments, but can be altered by a skilled person in the art within the scope of the claims. The present invention also encompasses, in its technical scope, any embodiment derived by combining technical means disclosed in differing embodiments.

That is, aspects of the present invention include the following.

<1> A PHA powder wherein

a composition ratio of a 3-hydroxybutyrate unit to a 3-hydroxyhexanoate unit is 80/20 to 91/9 (mol/mol), a moisture content is not more than 20%, and
a circularity of a primary particle present at a surface of the PHA powder is not less than 0.92.

<2> The PHA powder described in <1>, wherein the moisture content is not more than 2.0%.
<3> The PHA powder described in <1> or <2>, further containing a dispersing agent.
<4> The PHA powder described in <3>, wherein the PHA powder contains the dispersing agent in an amount of 0.1% by weight to 5.0% by weight.
<5> The PHA powder described in <3> or <4>, wherein the dispersing agent is at least one selected from the group consisting of polyvinyl alcohols, modified polyvinyl alcohols, water-soluble cellulose derivatives, alginic acids, water-soluble alginic acid derivatives, agar, gelatin, carrageenan, and polyacrylic acid derivatives.
<6> An aqueous suspension of a PHA powder, containing a PHA powder described in any one of <1> to <5>.
<7> A method for producing a PHA powder,

a PHA in the PHA powder being such that a composition ratio of a 3-hydroxybutyrate unit to a 3-hydroxyhexanoate unit is 80/20 to 91/9 (mol/mol),
the method including:

(a) a step of adding a dispersing agent to an aqueous PHA suspension and adjusting a pH to not more than 7; and
(b) a step of spray-drying the aqueous PHA suspension prepared in the step (a),

in the step (b), thermal drying energy /mass of a slurry being 1130 J/g to 1270 J/g.

<8> The method described in <7>, wherein the PHA powder contains the dispersing agent in an amount of 0.1% by weight to 5.0% by weight.

<9> The PHA powder described in <7> or <8>, wherein the dispersing agent is at least one selected from the group consisting of polyvinyl alcohols, modified polyvinyl alcohols, water-soluble cellulose derivatives, alginic acids, water-soluble alginic acid derivatives, agar, gelatin, carrageenan, and polyacrylic acid derivatives.

<10> A method for producing an aqueous suspension of a PHA powder, including

a step of redispersing a PHA powder described in any one of <1> to <5> or a PHA powder obtained by a method recited in any one of <7> to <9>.

<11> The method described in <10>, wherein the step of redispersing the PHA powder includes a step of redispersing the PHA powder in an aqueous solution which has a pH of 4 to 7 to obtain an aqueous suspension which has a pH of 3 to 5 and in which a concentration of a PHA is 45% to 55%.

<12> The method described in <10> or <11>, wherein a value expressed by the following formula (3) is not more than 1.2:

$$(D_{90} \text{ of a polyhydroxyalkanoate in the aqueous suspension after redispersion}) / (D_{90} \text{ of the polyhydroxyalkanoate in an aqueous suspension prepared in a step (a))} \tag{3}$$

In an embodiment of the present invention, it is preferable that, in the aqueous suspension obtained by the step in < 10> or < 11>, the volume median diameter of a PHA in the aqueous suspension after redispersion is substantially identical to the volume median diameter of the PHA in an aqueous suspension prepared in a step (a). Specifically, a value of formula (3) described in Examples is preferably not more than 1.2, more preferably not more than 1.1, and even more preferably not more than 1.05. The lower limit of formula (3) is preferably not less than 0.7, more preferably not less than 0.8, and even more preferably not less than 0.85.

Examples

The following description will discuss the present invention in more detail on the basis of Examples. Note, however, that the present invention is not limited to Examples. Note that, in Examples, "P3HB3HH" was used as a "PHA", and the term "PHA" can be read as "P3HB3HH".

[Measurement and evaluation methods]

In Examples and Comparative Examples, measurement and evaluation were carried out by the following methods.

(Measurement of composition ratio of repeating units of PHA)

A 3HH composition was measured by the method disclosed in paragraph 0047 of International Publication No. WO 2013/147139.

(Measurement of moisture content)

The moisture content of a powder was measured with use of a drying type moisture analyzer ML-50 (manufactured by A&D Company, Limited). The P3HB3HH powder was heated at 105°C until the rate at which the weight thereof changed fell below 0.05% (W.B.)/min. The moisture content of the P3HB3HH powder was determined from a change in weight before and after the heating.

(Calculation of thermal drying energy/mass of slurry)

Drying thermal energy/the mass of a slurry during spray drying was calculated in accordance with formula (1) below. An air specific heat capacity was 1.016 kJ/kg·K.

$$(\text{The thermal drying energy/the mass of the slurry}) = (\text{a gas flow rate}) \times (\text{the air specific heat capacity}) \times (\text{the temperature of hot air - the temperature of discharged air}) / (\text{the amount of the processed slurry}) \tag{1}$$

(Measurement of particle diameters $D_{50}$ and $D_{90}$)

Particle diameters were measured with use of a laser diffraction/ scatter particle size distribution meter LA-950 (HORIBA). A specific measurement method was as follows. To 20 mL of ion-exchange water, 0.05 g of sodium dodecyl sulfate, which is a surfactant, was added as a dispersing agent to obtain an aqueous surfactant solution. Subsequently, 0.2 g of a group of resin particles to be subjected to the measurement was added to the aqueous surfactant solution, and dispersed in the aqueous surfactant solution to obtain a dispersion liquid for the measurement. The prepared dispersion liquid was introduced into the laser diffraction/ scatter particle size distribution meter and subjected to the measurement. A particle diameter $D_{50}$ corresponds to 50% of the maximum particle size in a particle size cumulative distribution, and a particle diameter $D_{90}$ corresponds to 90% of the maximum particle size in the particle size cumulative distribution.

(Measurement of circularity)

An electron micrograph (SEM image) of the PHA powder was obtained with use of a scanning electron microscope device (SEM, S-3000N manufactured by HITACHI HIGH-TECHNOLOGIES CORPORATION). Then, circularities were measured with use of general-purpose image processing software (product name: NANO HUNTER NS2K-PRO/LT, manufactured by Nanosystem). The SEM image was taken into the image processing program, and the circumferences and areas of primary particles present at a surface of the PHA powder were measured. From the obtained circumferences and areas, circularities were calculated in accordance with formula (2) below. The circularities of randomly selected 100 polymer fine particles were calculated, and an average value of the circularities was shown in Table 1.

$$\text{(A circularity)} = 4\pi \times \text{(an area)} / \text{(a circumference)}^2 ...(2)$$

(Evaluation of stability of qualities)

The stability of qualities was evaluated on the basis of the presence or absence of corrosion or molds, after the powder was stored at 30°C to 40°C for one week. The powder was visually observed. The powder in which no abnormality, such as discoloration, occurrence of molds, or an odor, was confirmed was evaluated as "Good" in stability of the qualities. The powder in which an abnormality, such as discoloration, occurrence of molds, or an odor, was confirmed was evaluated as "Poor" in stability of the qualities.

(Evaluation of redispersibility)

The particle diameter $D_{90}$ of the PHA in the slurry before granulation (the volume-based 90% diameter of the PHA in an aqueous suspension prepared in a step (a)) and the particle diameter $D_{90}$ of the PHA in a slurry after redispersion (the volume-based 90% diameter of the PHA in an aqueous suspension after redispersion) were measured with use of a laser diffraction/ scatter particle size distribution meter LA-950 (HORIBA). Redispersibility was evaluated in accordance with the following formula (3).

($D_{90}$ of the polyhydroxyalkanoate in the aqueous suspension after the redispersion) / ($D_{90}$ of the polyhydroxyalkanoate in the aqueous suspension prepared in the step (a))     (3)

Formula (3) can also be expressed as follows.

(The particle diameter $D_{90}$ of the PHA in the slurry after the redispersion) / (the particle diameter $D_{90}$ of the PHA in the --> slurry before the granulation)     (3)

In a case where a value of formula (3) was more than 1.2, the dispersibility was evaluated as "Poor". In a case where the value of formula (3) was not more than 1.2, the dispersibility was evaluated as "Good".

(Evaluation of film forming properties)

The slurry was applied with use of an applicator having a slit such that the slurry had a thickness of approximately 0.1 mm. The slurry was then dried in a hot-air oven at 150°C to 160°C for 2 minutes to obtain a sheet. The obtained sheet was subjected to SEM observation, and the presence or absence of a void between the particles was checked. The sheet in which no void was present between the particles was evaluated as "Good" in film forming properties. The sheet in which a void was present between the particles was evaluated as "Poor" in film forming properties.

[Example 1]

(Preparation of microbial cell culture solution)

*Ralstonia eutropha* disclosed in International Publication No. WO 2019/ 142717 was cultured by the method disclosed in paragraphs 0041 to 0048 of the same literature to obtain a microbial cell culture solution which contained microbial cells containing a PHA. Note that *Ralstonia eutropha* is currently classified as *Cupriavidus necator.* The composition ratio of repeating units (the composition ratio of a 3HB unit to a 3HH unit) of the PHA was 89/ 11 (mol/ mol).

(Sterilization)

The obtained microbial cell culture solution was sterilized by heating and stirring the microbial cell culture solution at an internal temperature of 60°C to 80°C for 20 minutes.

(High-pressure crushing)

To the sterilized microbial cell culture solution thus obtained, 0.2% by weight of sodium dodecyl sulfate was added. An aqueous sodium hydroxide solution was further added so that a pH became 11.0, and then an obtained solution was kept at 50°C for 1 hour. Then, the solution was subjected to high-pressure crushing at a pressure of 450 kgf/cm$^2$ to 550 kgf/cm$^2$ with use of a high-pressure crusher (a high-pressure homogenizer, model PA2K, manufactured by Niro-Soavi).

(Refinement)

To a crushed solution obtained as a result of the high-pressure crushing, distilled water was added in an amount equivalent to the crushed solution. An obtained solution was centrifuged, and then a supernatant was removed for 2-fold concentration. To this concentrated aqueous suspension of the PHA, an aqueous sodium hydroxide solution (pH 11) was added in an amount equal to that of the removed supernatant. An obtained mixture was centrifuged, and a supernatant was removed. Subsequently, water was added again, and an obtained mixture was suspended. After that, 0.2% by weight of sodium dodecyl sulfate and protease (Esperase, manufactured by Novozymes) in an amount of 1/100th of the weight of the PHA were added. An obtained suspension was stirred for 2 hours while being kept at pH 10 and 50°C. The suspension was then centrifuged, and a supernatant was removed for 4-fold concentration. To the suspension, water was further added so that the concentration of the PHA was adjusted to 50% by weight. The volume median diameter (particle diameter $D_{50}$) of the PHA in the aqueous suspension was 3.1 μm.

(Spray drying)

To the obtained aqueous PHA suspension (solid content concentration: 50%), 3.0 phr (3.0 parts by weight with respect to 100 parts by weight of the PHA present in the aqueous suspension) of polyvinyl alcohol (product name: Poval) having an average polymerization degree of 500 and a saponification degree of 88 mol% was added. Thereafter, the solid content concentration was adjusted to 45.9%. This solution was stirred for 30 minutes. After that, the pH was adjusted by adding sulfuric acid until the pH was stabilized at 4. The PHA in the aqueous PHA suspension thus obtained had a volume median diameter (particle diameter $D_{50}$) (before granulation) of 3.6 μm and a volume-based 90% diameter (particle diameter $D_{90}$) (before granulation) of 6.5 μm. The aqueous PHA suspension was sent to an atomizer with use of an OC-16 general-purpose spray dryer manufactured by OHKAWARA KAKOHKI CO., LTD., and then spray drying was carried out (the temperature of hot air: 110°C, the temperature of exhaust air: 50°C, the amount of the processed slurry: 26.2 kg/h, and a gas flow rate: 563 m$^3$/h). The moisture content of a finally obtained powdery and/or granular material was 1.8% by weight on a wet basis. The circularities of primary particles present at a surface of the PHA powder were 0.97.

(Redispersion)

The obtained powder and distilled water were mixed to prepare an aqueous PHA suspension (solid content concentration: 50%). Thereafter, crushing was carried out for 5 minutes at a shearing rate of 22,000 s-1 with use of a high-shearing crusher (homogenizing mixer MARK II, manufactured by PRIMIX Corporation).

[Example 2]

The pH of an aqueous PHA suspension was adjusted to 4, and spray drying was carried out (the temperature of hot air: 110°C, the temperature of exhaust air: 60°C, the amount of a processed slurry: 21.0 kg/h, and a gas flow rate: 555

m$^3$/h), by operations similar to those in Example 1. The moisture content of a finally obtained powdery and/or granular material was 0.41% by weight on a wet basis. Redispersion was carried out by an operation similar to that in Example 1. The circularities of primary particles present at a surface of the PHA powder were 0.97.

[Example 3]

The pH of an aqueous PHA suspension was adjusted to 4, and spray drying was carried out (the temperature of hot air: 110°C, the temperature of exhaust air: 65°C, the amount of a processed slurry: 18.6 kg/h, and a gas flow rate: 551 m$^3$/h), by operations similar to those in Example 1. The moisture content of a finally obtained powdery and/or granular material was 0.34% by weight on a wet basis. Redispersion was carried out by an operation similar to that in Example 1. The circularities of primary particles present at a surface of the PHA powder were 0.98.

[Example 4]

The pH of an aqueous PHA suspension was adjusted to 4, and spray drying was carried out (the temperature of hot air: 110°C, the temperature of exhaust air: 45°C, the amount of a processed slurry: 28.9 kg/h, and a gas flow rate: 567 m$^3$/h), by operations similar to those in Example 1. The moisture content of a finally obtained powdery and/or granular material was 2.41% by weight on a wet basis. Redispersion was carried out by an operation similar to that in Example 1. The circularities of primary particles present at a surface of the PHA powder were 0.96.

[Comparative Example 1]

A microbial cell culture solution which contained microbial cells containing a PHA was obtained by the method disclosed in the International Publication No. WO 2019/ 142717, similarly to Example 1. The composition ratio of repeating units (the composition ratio of a 3HB unit to a 3HH unit) of the PHA was 94/6 (mol/mol). The pH of an aqueous PHA suspension was adjusted to 4, and spray drying was carried out (the temperature of hot air: 140°C, the temperature of exhaust air: 80°C, the amount of a processed slurry: 13.2 kg/h, and a gas flow rate: 332 m$^3$/h), by operations similar to those in Example 1. The moisture content of a finally obtained powdery and/or granular material was 0.21% by weight on a wet basis. Redispersion was carried out by an operation similar to that in Example 1. The circularities of primary particles present at a surface of the PHA powder were 0.97.

[Comparative Example 2]

The pH of an aqueous PHA suspension was adjusted to 4, and spray drying was carried out (the temperature of hot air: 140°C, the temperature of exhaust air: 80°C, the amount of a processed slurry: 13.2 kg/h, and a gas flow rate: 332 m$^3$/h), by operations similar to those in Example 1. The moisture content of a finally obtained powdery and/or granular material was 0.24% by weight on a wet basis. Redispersion was carried out by an operation similar to that in Example 1. The circularities of primary particles present at a surface of the PHA powder were 0.91.

[Table 1]

| Category | | Unit | Example 1 | Example 2 | Example 3 | Example 4 | Comparative Example 1 | Comparative Example 2 |
|---|---|---|---|---|---|---|---|---|
| Slurry composition | 3HH composition | mol% | 11 | 11 | 11 | 11 | 6 | 11 |
| Spray drying conditions | Drying thermal energy/mass of slurry | kJ/kg | 1159 | 1188 | 1198 | 1147 | 1276 | 1276 |
| Powder characteristics | Moisture content | %(W.B.) | 1.8 | 0.41 | 0.31 | 2.01 | 0.21 | 0.21 |
| | Particle diameter $D_{50}$ after granulation | μm | 101 | 104 | 93 | 96 | 87 | 102 |
| | Circularity | | 0.97 | 0.97 | 0.98 | 0.96 | 0.97 | 0.91 |
| | Stability of qualities | | Good | Good | Good | Poor | Good | Good |
| Slurry characteristics | Particle diameter $D_{50}$ | μm | 3.2 | 3.5 | 3.4 | 3.3 | 3.2 | 3.6 |
| | Particle diameter $D_{90}$ | μm | 6.0 | 6.5 | 6.1 | 6.3 | 6.3 | 41.2 |
| | Redispersibility: $D_{90}$ after redispersion / $D_{90}$ before redispersion | | 0.9 | 1.0 | 0.9 | 1.0 | 1.0 | 6.8 |
| | Redispersibility | | Good | Good | Good | Good | Good | Poor |
| | Film forming properties | | Good | Good | Good | Good | Poor | Poor |

<Results>

As in Table 1, it was shown that Examples 1 to 4 were more excellent in redispersibility and film forming properties than Comparative Examples 1 and 2. Furthermore, it was also shown that Examples 1 to 3 were also excellent in stability of qualities in addition to redispersibility and film forming properties.

Industrial Applicability

Since the present PHA powder has (i) good redispersibility when the present PHA powder is formed into a slurry and (ii) good film forming properties when the present PHA powder is applied to slurry coating, the present PHA powder can be suitably used in the fields of agriculture, fishery, forestry, horticulture, medicine, sanitary products, clothing, non-clothing, packaging, automobiles, building materials, and the like.

**Claims**

1. A polyhydroxyalkanoate powder wherein

   a composition ratio of a 3-hydroxybutyrate unit to a 3-hydroxyhexanoate unit is 80/20 to 91/9 (mol/mol),
   a moisture content is not more than 20%, and
   a circularity of a primary particle present at a surface of the polyhydroxyalkanoate powder is not less than 0.92.

2. The polyhydroxyalkanoate powder as set forth in claim 1, wherein the moisture content is not more than 2.0%.

3. The polyhydroxyalkanoate powder as set forth in claim 1 or 2, further comprising a dispersing agent.

4. The polyhydroxyalkanoate powder as set forth in claim 3, wherein the polyhydroxyalkanoate powder comprises the dispersing agent in an amount of 0.1% by weight to 5.0% by weight.

5. The polyhydroxyalkanoate powder as set forth in claim 3, wherein the dispersing agent is at least one selected from the group consisting of polyvinyl alcohols, modified polyvinyl alcohols, water-soluble cellulose derivatives, alginic acids, water-soluble alginic acid derivatives, agar, gelatin, carrageenan, and polyacrylic acid derivatives.

6. An aqueous suspension of a polyhydroxyalkanoate powder, comprising a polyhydroxyalkanoate powder recited in claim 1 or 2.

7. A method for producing a polyhydroxyalkanoate powder,

   a polyhydroxyalkanoate in the polyhydroxyalkanoate powder being such that a composition ratio of a 3-hydroxybutyrate unit to a 3-hydroxyhexanoate unit is 80/20 to 91/9 (mol/mol),
   said method comprising:

      (a) a step of adding a dispersing agent to an aqueous polyhydroxyalkanoate suspension and adjusting a pH to not more than 7; and
      (b) a step of spray-drying the aqueous polyhydroxyalkanoate suspension prepared in the step (a),

   in the step (b), thermal drying energy/mass of a slurry being 1130 J/g to 1270 J/g.

8. The method as set forth in claim 7, wherein the polyhydroxyalkanoate powder comprises the dispersing agent in an amount of 0.1% by weight to 5.0% by weight.

9. The method as set forth in claim 7 or 8, wherein the dispersing agent is at least one selected from the group consisting of polyvinyl alcohols, modified polyvinyl alcohols, water-soluble cellulose derivatives, alginic acids, water-soluble alginic acid derivatives, agar, gelatin, carrageenan, and polyacrylic acid derivatives.

10. A method for producing an aqueous suspension of a polyhydroxyalkanoate powder, comprising
    a step of redispersing a polyhydroxyalkanoate powder recited in claim 1 or 2 or a polyhydroxyalkanoate powder obtained by a method recited in claim 7 or 8.

**11.** The method as set forth in claim 10, wherein the step of redispersing the polyhydroxyalkanoate powder includes a step of redispersing the polyhydroxyalkanoate powder in an aqueous solution which has a pH of 4 to 7 to obtain an aqueous suspension which has a pH of 3 to 5 and in which a concentration of a polyhydroxyalkanoate is 45% to 55%.

**12.** The method as set forth in claim 10, wherein a value expressed by the following formula (3) is not more than 1.2:

(D$_{90}$ of a polyhydroxyalkanoate in the aqueous suspension after redispersion) / (D$_{90}$ of the polyhydroxyalkanoate in an aqueous suspension prepared in a step (a))

(3).

## INTERNATIONAL SEARCH REPORT

International application No.

**PCT/JP2023/003423**

### A. CLASSIFICATION OF SUBJECT MATTER

***C08J 3/12***(2006.01)i; ***C08J 3/05***(2006.01)i; ***C08J 5/18***(2006.01)i
FI: C08J3/12 101; C08J3/05; C08J5/18; C08J3/12 A CFD

According to International Patent Classification (IPC) or to both national classification and IPC

### B. FIELDS SEARCHED

Minimum documentation searched (classification system followed by classification symbols)

C08J3/00-3/28; C08J99/00; C08J5/00-5/02; C08J5/12-5/22; C08G63/00-64/42; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2021/251049 A1 (KANEKA CORPORATION) 16 December 2021 (2021-12-16) entire text | 1-12 |
| A | WO 2018/016080 A1 (SEKISUI PLASTICS CO., LTD.) 25 January 2018 (2018-01-25) entire text | 1-12 |
| A | JP 2021-195470 A (KANEKA CORPORATION) 27 December 2021 (2021-12-27) entire text | 1-12 |
| A | WO 2021/085534 A1 (KANEKA CORPORATION) 06 May 2021 (2021-05-06) entire text | 1-12 |
| A | WO 2021/085120 A1 (KANEKA CORPORATION) 06 May 2021 (2021-05-06) entire text | 1-12 |
| A | WO 2020/189485 A1 (SEKISUI PLASTICS CO., LTD.) 24 September 2020 (2020-09-24) entire text | 1-12 |
| A | JP 2019-534692 A (BIO-ON S.P.A.) 05 December 2019 (2019-12-05) entire text | 1-12 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 April 2023** | **18 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

EP 4 477 689 A1

**INTERNATIONAL SEARCH REPORT**
Information on patent family members

International application No.

**PCT/JP2023/003423**

| Patent document cited in search report | | | Publication date (day/month/year) | Patent family member(s) | | | Publication date (day/month/year) |
|---|---|---|---|---|---|---|---|
| WO | 2021/251049 | A1 | 16 December 2021 | (Family: none) | | | |
| WO | 2018/016080 | A1 | 25 January 2018 | US entire text | 2019/0276611 | A1 | |
| | | | | US | 2021/0309811 | A1 | |
| | | | | EP | 3489281 | A1 | |
| | | | | CN | 109312079 | A | |
| | | | | KR 10-2019-0034150 | | A | |
| JP | 2021-195470 | A | 27 December 2021 | (Family: none) | | | |
| WO | 2021/085534 | A1 | 06 May 2021 | US entire text | 2022/0340710 | A1 | |
| | | | | EP | 4052784 | A1 | |
| | | | | CN | 114729131 | A | |
| WO | 2021/085120 | A1 | 06 May 2021 | (Family: none) | | | |
| WO | 2020/189485 | A1 | 24 September 2020 | US entire text | 2022/0153996 | A1 | |
| | | | | EP | 3940020 | A1 | |
| | | | | CN | 113574097 | A | |
| JP | 2019-534692 | A | 05 December 2019 | US entire text | 2020/0024172 | A1 | |
| | | | | WO | 2018/055587 | A1 | |
| | | | | EP | 3515614 | A1 | |

Form PCT/ISA/210 (patent family annex) (January 2015)

17

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018070492 A
- WO 2010013483 A
- WO 2021085534 A
- WO 2010067543 A
- WO 2013147139 A
- WO 2019142717 A

**Non-patent literature cited in the description**

- **T. FUKUI** ; **Y. DOI**. *J. Bacteriol.*, 1997, vol. 179, 4821-4830